# EUROPEAN PATENT APPLICATION

(11) **EP 2 206 958 A2**
(43) Date of publication of application: **14.07.2010**
(21) Application number: 09180254.6
(22) Date of filing: 21.12.2009
(51) Int. Cl.: F23R 3/28, F23R 3/34, F23R 3/36, F23R 3/12

(54) **Method and apparatus for fuel injection in a turbine engine**

(30) Priority: 07.01.2009 US 350051
(71) Applicant: General Electric Company, Schenectady, NY 12345 (US)
(72) Inventor: Berry, Jonathan Dwight, Simpsonville, SC 29681 (US); Brown, James T., Piedmont, SC 29673 (US); Karim, Hasan, Greenville, SC 29615 (US); Simons, Girard Albert, Anderson, SC 29625 (US)
(74) Representative: Gray, Thomas

(57) **Abstract**

In one embodiment, a turbine system (10), may include a fuel nozzle (12), that includes a plurality of fuel passages (56, 58) and a plurality of air passages (48) offset in a downstream direction from the fuel passages (56, 58). In the embodiment, an air flow from the air passages (48) is configured to intersect with a fuel flow from the fuel passages (56, 58) at an angle to induce swirl and mixing of the air flow and the fuel flow downstream of the fuel nozzle (12).

## Description

The present disclosure relates generally to a gas turbine engine and, more specifically, to a fuel nozzle with improved fuel-air mixing characteristics.

Fuel-air mixing affects engine performance and emissions in a variety of engines, such as gas turbine engines. For example, a gas turbine engine may employ one or more nozzles to facilitate fuel-air mixing in a combustor. Typically, the nozzles are configured to facilitate mixing of compressed air with a high British thermal unit (i.e., high BTU or HBTU) fuel. Unfortunately, the nozzles may not be suitable for mixing compressed air with a low BTU (LBTU) fuel. For example, the LBTU fuel may produce a low amount of heat per volume of fuel, whereas the HBTU fuel may produce a high amount of heat per volume of fuel. As a result, the HBTU fuel nozzles may not be capable of mixing the LBTU fuel with compressed air in a suitable ratio or mixing intensity.

In one embodiment according to the present invention, a turbine system may include a fuel nozzle, that includes a plurality of fuel passages and a plurality of air passages offset in a downstream direction from the fuel passages. In the embodiment, an air flow from the air passages is configured to intersect with a fuel flow from the fuel passages at an angle to induce swirl and mixing of the air flow and the fuel flow downstream of the fuel nozzle.

Various features, aspects, and advantages of the present invention will become better understood when the following detailed description is read with reference to the accompanying drawings in which like characters represent like parts throughout the drawings, wherein:
FIG. 1 is a block diagram of a turbine system having fuel nozzles with an improved air and fuel mixing arrangement coupled to a combustor in accordance with certain embodiments of the present technique;
FIG. 2 is a cutaway side view of the turbine system, as shown in FIG. 1, in accordance with certain embodiments of the present technique;
FIG. 3 is a cutaway side view of the combustor, as shown in FIG. 1, with a plurality of fuel nozzles coupled to an end cover of the combustor in accordance with certain embodiments of the present technique;
FIG. 4 is a perspective view of the end cover and fuel nozzles of the combustor, as shown in FIG. 3, in accordance with certain embodiments of the present technique;
FIG. 5 is a perspective view of a fuel nozzle, as shown in FIG. 4, in accordance with certain embodiments of the present technique;
FIG. 6 is an end view of the fuel nozzle, as shown in FIG. 5, in accordance with certain embodiments of the present technique; and
FIG. 7 is a sectional side view of the fuel nozzle, as shown in FIG. 5, including an end cover and a liner, in accordance with certain embodiments of the present technique.

### DETAILED DESCRIPTION OF THE INVENTION

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments.

As discussed in detail below, various embodiments of fuel nozzles may be employed to improve the performance of a turbine engine. For example, embodiments of the fuel nozzles may include a crosswise arrangement of fuel and air passages, wherein air passages are oriented to impinge air streams onto a fuel stream from the fuel passage. For example, the fuel passage may be disposed at a central location along a central longitudinal axis of the fuel nozzle, whereas the air passages may be disposed about the fuel passage at angles toward the central longitudinal axis. In other words, embodiments of the fuel nozzles may arrange a plurality of air passages about a circumference of the fuel stream, such that the air streams flow radially inward toward the fuel stream to break up the fuel stream and facilitate fuel-air mixing. In certain embodiments, the air passages may be arranged to direct the air streams at an offset from the central longitudinal axis, such that the air streams simultaneously impinge the fuel stream and induce swirling of the fuel stream and resulting fuel-air mixture. For example, the air streams may swirl in a first direction, the fuel streams may swirl in a second direction, wherein the first and second directions may be the same or opposite from one another.

Embodiments of the fuel nozzle may position the air passages at any suitable location. In an exemplary embodiment, the air passages are positioned at a downstream end portion of the fuel nozzle, such that the fuel-air mixing occurs substantially downstream from the fuel nozzle. The arrangement may be particularly useful for mixing low British thermal unit (LBTU) fuel, which has a lower combustion temperature or heating value than other fuels. Specifically, without the disclosed embodiments of fuel nozzles, the use of LBTU fuels may cause auto ignition or early flame holding upstream of the desirable region within a turbine combustor. In an exemplary embodiment, the air passages may include air outlets on an inner surface of an annular collar wall located at the downstream end portion of the fuel nozzle. The collar may be described as an annular wall coupled to the base portion, wherein the annular wall defines a hollow central region downstream from the fuel ports, where the annular wall comprises a plurality of air passages. As will be discussed further below, the disclosed embodiments of the fuel nozzle may enable improved air fuel mixtures and reduce flame holding near a combustor base or within the fuel nozzle itself.

In certain embodiments, the disclosed nozzles may mix different fuels with high and low energies (BTU levels), high and low values of heat output, or a combination thereof. For example, the disclosed embodiments may include a controller, control logic, and/or a system having combustions controls configured to facilitate a desired mixture of LBTU and HBTU fuels to attain a suitable heating value for the application. A heating value may be used to define energy characteristics of a fuel. For example, the heating value of a fuel may be defined as the amount of heat released by combusting a specified quantity of fuel. In particular, a lower heating value (LHV) may be defined as the amount of heat released by combusting a specified quantity (e.g., initially at 25 °C or another reference state) and returning the temperature of the combustion products to a target temperature (e.g., 150 °C). The disclosed embodiments may employ some amount of HBTU fuels during transient conditions (e.g., start-up) and high loads, while using LBTU fuels during steady state or low load conditions.

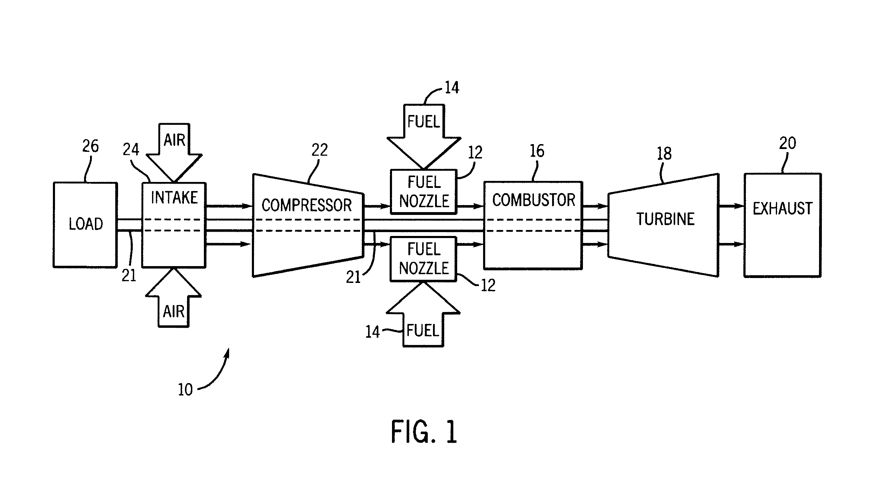

FIG. 1 is a block diagram of an embodiment of turbine system 10 having fuel nozzles 12 in accordance with certain embodiments of the present technique. As discussed in detail below, the disclosed embodiments employ an improved fuel nozzle 12 design to increase performance of the turbine system 10. Turbine system 10 may use liquid or gas fuel, such as natural gas and/or a hydrogen rich synthesis gas (e.g., syngas), to run the turbine system 10. As depicted, fuel nozzles 12 intake a fuel supply 14, such as LBTU fuel, mix the fuel with air, and distribute the air-fuel mixture into a combustor 16. The air-fuel mixture combusts in a chamber within combustor 16, thereby creating hot pressurized exhaust gases. The combustor 16 directs the exhaust gases through a turbine 18 toward an exhaust outlet 20. As the exhaust gases pass through the turbine 18, the gases force turbine blades to rotate a shaft 21 along an axis of system 10. As illustrated, shaft 21 is connected to various components of turbine system 10, including compressor 22. Compressor 22 also includes blades coupled to shaft 21. Thus, blades within compressor 22 rotate as shaft 21 rotates, thereby compressing air from air intake 24 through compressor 22 into fuel nozzles 12 and/or combustor 16. Shaft 21 is also connected to load 26, which may be a vehicle or a stationary load, such as an electrical generator in a power plant or a propeller on an aircraft. Load 26 may be any suitable device that is powered by the rotational output of turbine system 10.

As discussed further below, improvements in the mixing of air and fuel from fuel nozzle 12 as the mixture travels downstream to combustor 16 enables usage of LBTU fuels within turbine system 10. LBTU fuels may be readily available and less expensive than HBTU fuels. For example, LBTU fuels may be byproducts from various plant processes. Unfortunately, these byproducts may be discarded as waste. As a result, the disclosed embodiments may improve overall efficiency of a facility or refinery by using otherwise wasted byproducts for fuel in gas turbine engines and power generation equipment. For example, a coal gasification process is one type of plant process that produces a LBTU fuel. A coal gasifier typically produces a primary output of CO and H₂. The H₂ may be used with the fuel nozzle 12 of the disclosed embodiments. The disclosed embodiments enable an improved air-fuel mixture and enable flame occurrence within a combustor, rather than within the fuel nozzle 12. In certain embodiments, the nozzle 12 has air ports positioned downstream of fuel ports to enable injection of air streams into a fuel stream, thereby facilitating enhanced mixing of fuel and air as the flows move downstream from the fuel nozzle 12. For example, the fuel nozzle 12 may position the fuel port at a central location, whereas the air ports may be positioned at different circumferential locations about the central location to direct the air streams radially inward toward the fuel stream to induce mixing and swirl.

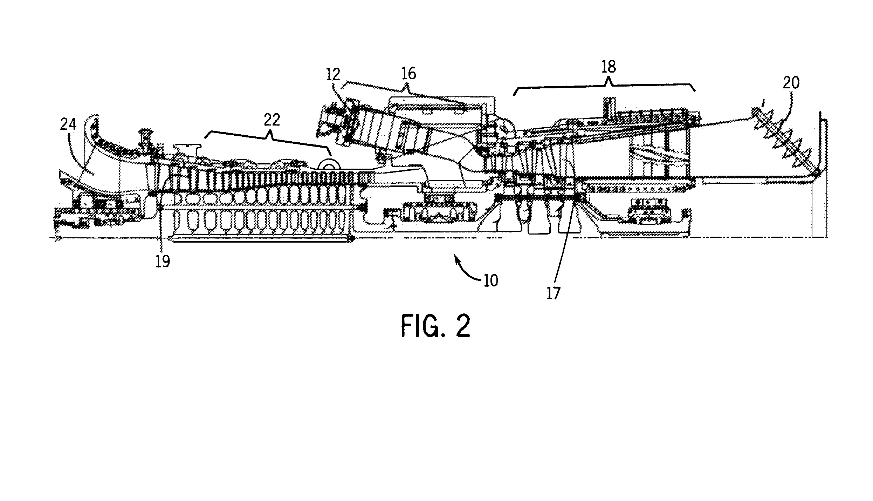

FIG. 2 is a cutaway side view of an embodiment of turbine system 10. Turbine system 10 includes one or more fuel nozzles 12 located inside one or more combustors 16 in accordance with unique aspects of the disclosed embodiments. In one embodiment, six or more fuel nozzles 12 may be attached to the base of each combustor 16 in an annular or other arrangement. Moreover, the system 10 may include a plurality of combustors 16 (e.g., 4, 6, 8, 12) in an annular arrangement. Air enters the system 10 through air intake 24 and may be pressurized in compressor 22.

The compressed air may then be mixed with gas by fuel nozzles 12 for combustion within combustor 16. For example, fuel nozzles 12 may inject a fuel-air mixture into combustors in a suitable ratio for optimal combustion, emissions, fuel consumption, and power output. The combustion generates hot pressurized exhaust gases, which then drive blades 17 within the turbine 18 to rotate shaft 21 and, thus, compressor 22 and load 26. As depicted, the rotation of blades 17 cause a rotation of shaft 21, thereby causing blades 19 within compressor 22 to draw in and pressurize air. Thus, proper mixture and placement of the air and fuel stream by fuel nozzles 12 is important to improving the emissions performance of turbine system 10.

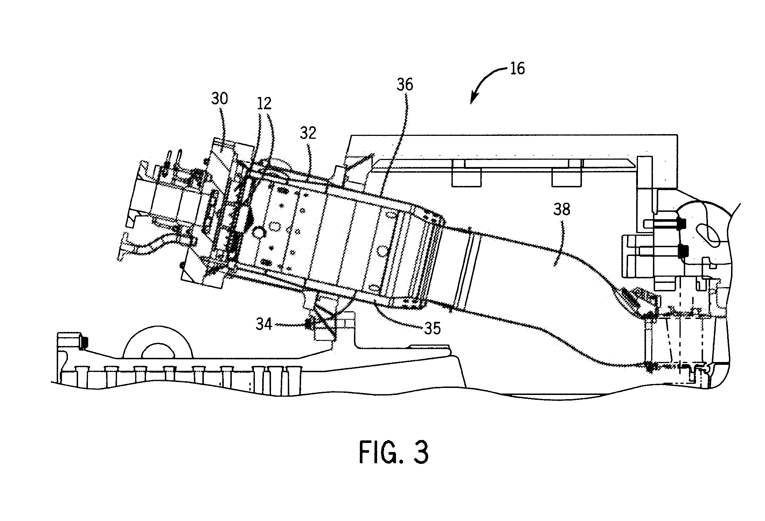

A detailed view of an embodiment of combustor 16, as shown FIG. 2, is illustrated in FIG. 3. In the diagram, a plurality of fuel nozzles 12 are attached to end cover 30, near the base of combustor 16. In an embodiment, six fuel nozzles 12 are attached to end cover 30. Compressed air and fuel are directed through end cover 30 to each of the fuel nozzles 12, which distribute an air-fuel mixture into combustor 16. Combustor 16 includes a chamber generally defined by casing 32, liner 34, and flow sleeve 36. In certain embodiments, flow sleeve 36 and liner 34 are coaxial with one another to define a hollow annular space 35, which may enable passage of air for cooling and entry into the combustion zone (e.g., via perforations in liner 34). The design of casing 32, liner 34, and flow sleeve 36 provide optimal flow of the air fuel mixture through transition piece 38 (e.g., converging section) towards turbine 18. For example, fuel nozzles 12 may distribute a pressurized air fuel mixture into combustor 16 through liner 34 and flow sleeve 36, wherein combustion of the mixture occurs. The resultant exhaust gas flows through transition piece 38 to turbine 18, causing blades of turbine 18 to rotate, along with shaft 21. In an ideal combustion process, the air-fuel mixture combusts downstream of the fuel nozzles 12, within combustor 16. Mixing of the air and fuel streams may depend on properties of each stream, such as fuel heating value, flow rates, and temperature. In particular, the pressurized air may be at a temperature, around 650-900°F and Fuel may be around 70-500 °F. As a result of differences in fuels, materials, temperatures, and/or geometries, the air may be injected to impinge a fuel stream downstream of a fuel outlet, thereby improving mixing and combustion of an LBTU fuel by shifting the mixture process downstream of a fuel nozzle 12. This arrangement for fuel nozzle 12 enables usage of various fuels, geometries, and mixtures by turbine system 10.

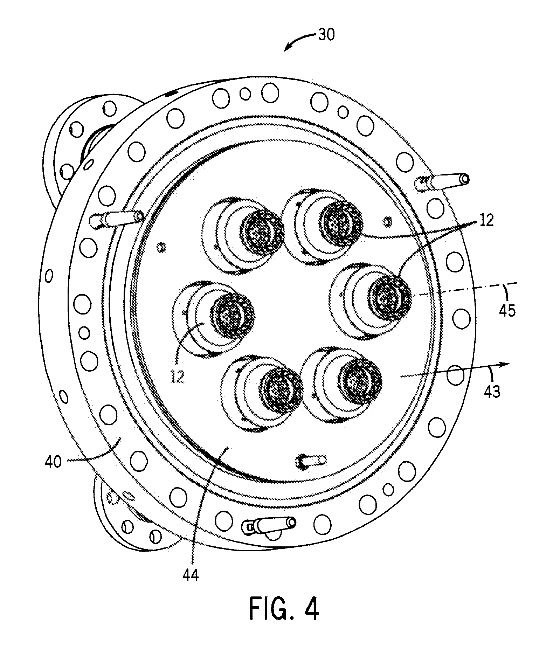

FIG. 4 is a detailed perspective view of an embodiment of end cover 30 with a plurality of fuel nozzles 12 attached to a base or end cover surface 40. In the illustration, six fuel nozzles 12 are attached to end cover surface 40 in an annular arrangement. However, any suitable number and arrangement of fuel nozzles 12 may be attached to end cover surface 40. As will be described in detail, nozzles 12 are designed to shift an air-fuel mixture and ignition to occur in a downstream direction 43, away from nozzles 12. Baffle plate 44 may be attached to end cover surface 40 via bolts and risers, thereby covering a base portion of fuel nozzles 12 and providing a passage for diluent flow within combustor 16. For example, air inlets may be directed inward, toward axis 45 of each fuel nozzle 12, thereby enabling an air stream to mix with a fuel stream as it is traveling in downstream direction 43 through a transition area of combustor 16. Further, the air streams and fuel streams may swirl in opposite directions, such as clockwise and counter clockwise, respectively, to enable a better mixing process. In another embodiment, the air and fuel streams may be swirl in the same direction to improve mixing, depending on system conditions and other factors. As depicted, outer air holes lead to angled air passages that may direct the air stream toward axis 45. The configuration of fuel nozzles 12 may shift fuel-air mixing and combustion further away from the end cover surface 40 and fuel nozzles 12, thereby reducing the undesirable possibility of early flame holding in the vicinity of surface 40 and fuel nozzles 12. Specifically, by locating the air and fuel mixing process downstream 43, the combustion process may occur further downstream in the central portion of combustor 16, avoiding potential damage to nozzles should flame holding occur within the nozzle itself.

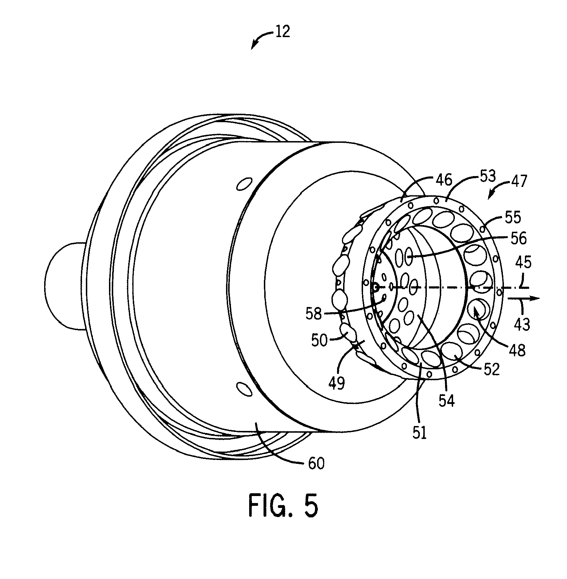

FIG. 5 is a detailed perspective view of an embodiment of fuel nozzle 12, as shown in FIG. 4. As depicted, fuel nozzle 12 has a generally cylindrical structure with one or more annular and coaxial portions. For example, fuel nozzle 12 includes a radial collar 46 at a downstream end portion 47, wherein the radial collar is configured to create a cross flow of compressed air streams and fuel streams. In the embodiment, radial collar 46 is located in a downstream direction 43 away from the end cover surface 40 of combustor 16. Radial collar 46 includes air passages 48 that may be spaced at different angular positions along an annular wall (e.g., circumferential portion) of radial collar 46, such that the air passages generally define an annular arrangement of air streams toward nozzle axis 45. Further, air passages 48 include air inlet holes 50 located along an outer annular surface 49 of radial collar 46, and air outlet holes 52 located along an interior annular surface 51 of radial collar 46.

In certain embodiments, the fuel nozzle 12 may include one or more fuel passages, e.g., 56 and 58, to facilitate fuel-air mixing with the air passages 48. For example, the fuel nozzle 12 may position the fuel passages 56 and 58 along an inner end surface 54 upstream from the radial collar 46 and air passages 48. Thus, the fuel passages 56 and 58 output fuel streams, which flow through a hollow interior of the radial collar 46 in the downstream direction 43 toward the air passages 48. Upon reaching the air passages 48, the air streams impinge the fuel streams to induce mixing and optionally some type of swirling flow. As depicted, air passages 48 extend only through the annular wall portion of radial collar 46 without passing through nozzle base portion 60. Likewise, the fuel passages 56 and 58 extend only through the nozzle base portion 60 without extending through the annular wall portion of radial collar 46, thereby introducing the air flow only at the downstream end portion of the fuel nozzle 12.

The fuel passages 56 and 58 may supply a variety of fuels based on various conditions. For example, the fuel passages 56 and 58 may supply a liquid fuel, a gas fuel, or a combination thereof. By further example, the fuel passages 56 and 58 may supply the same fuel, a different fuel, or both depending on various operating conditions. In certain embodiments, the fuel passages 56 and 58 may supply LBTU and HBTU fuels, only LBTU fuels, or only HBTU fuels at various operating conditions, e.g., transient conditions (e.g., start-up), steady-state conditions, various loads, and so forth. For example, the fuel passages 58 may supply a HBTU fuel while fuel passages 56 supply a LBTU fuel during transient conditions (e.g., start-up) or high loads. During steady-state or low load conditions, the fuel passages 56 and 58 may all supply LBTU fuels, such as the same LBTU fuel.

In certain exemplary embodiments, the fuel passages 56 may be positioned radially between the fuel passages 58 and the air passages 48. For example, the air passages 48 may define a first annular arrangement, which surrounds a second annular arrangement of the fuel passages 56, which in turn surrounds a central arrangement of the fuel passages 58. In certain embodiments, the inner end surface 54 may be entirely flat, partially flat, entirely curved, partially curved, or defined by some other geometry. For example, the fuel passages 58 may be disposed on a dome-shaped portion of the end surface 54. The fuel passages 56 and/or 58 may be oriented parallel to the longitudinal axis 45 or at some non-zero angle relative to the axis 45. For example, the fuel passages 56 and 58 may include fuel passages angled inwardly toward the axis 45, outwardly from the axis 45, or a combination thereof. By further example, the fuel passages 56 and 58 may be angled at an offset from the axis 45 to induce a clockwise swirl about the axis 45, a counterclockwise swirl about the axis 45, or both. This fuel swirl may be in the same direction or an opposite direction from a swirling flow from the air passages 48.

In operation of the fuel nozzle 12, the fuel passages 56 and/or 58 direct fuel streams in the downstream direction 43 toward the air passages 48, which in turn direct air streams in an inward radial direction to impinge the fuel streams. The fuel and air streams may create swirling flows in the same or opposite directions to improve fuel-air mixing. For example, the air streams may impinge a gas fuel stream, a liquid fuel stream, or a combination thereof, wherein the fuel streams may include LBTU fuel, HBTU fuel, or both. In an embodiment, fuel passages 58 may emit a natural gas or other gas or liquid high BTU fuel. Fuel emitted from passages 58 may travel downstream 43 for mixing with airstreams from air passages 48 directed towards axis 45. During startup, natural gas may flow through fuel passages 58, thereby providing a richer gas for combustion during the beginning of a turbine cycle. The central fuel tip 59 can be replaced with a liquid fuel tip for a flow of oil. After startup, the central fuel tip 59 may emit a liquid or gas LBTU fuel for mixing with air from air passages 48 in a downstream direction from fuel nozzle 12.

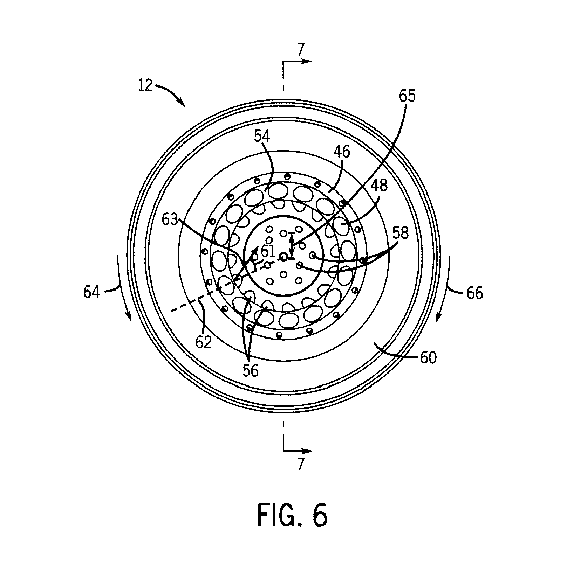

FIG. 6 is an end view of an embodiment of fuel nozzle 12, as shown in FIG. 5. The embodiment includes nozzle base portion 60, air flow passages 48, fuel passages 56, and fuel passages 58. In an embodiment, fuel passages 56 may be oriented at an angle 61 as indicated by arrow 63 relative to a dashed radial line 62 originating at the central longitudinal axis 45. In certain embodiments, the dashed radial line 62 may represent a plane along the axis 45. Thus, the angle 61 may be defined in the plane of the page or perpendicular to the page, while arrow 63 illustrates a direction of fuel flow downstream (outward from the page) within the plane of arrow 63. In either case, the angle 61 is configured to induce a swirling flow about the axis 45. In certain embodiments, the angle 61 may range between about 0 to 75 degrees, 0 to 60 degrees, 0 to 45 degrees, 0 to 30 degrees, 0 to 15 degrees, or any suitable angle to provide a desired intensity of swirl. Arrow 64 illustrates a counterclockwise direction in which fuel streams may swirl as they exit fuel passages 56 and/or passages 58.

Further, arrow 66 illustrates a clockwise swirling direction that may be caused by an angled orientation of air passages 48. In other words, in certain embodiments, the fuel and air streams may counter swirl. In other embodiments, the air passages 48 may have no swirling action while fuel passages 56 and/or 58 may have a swirling in direction 64 or 66. Alternatively, fuel passages 56 and/or 58 may have no swirling action while air passages 48 may have a swirling in direction 64 or 66. Lastly, the fuel and air passages, 56, 58, and 48, respectively, may be oriented to swirl in the same direction. Swirling air streams from passages 48 in direction 66 may produce a more rapid and vigorous mixing process with fuel streams swirling in direction 64. The air passages 48 may be defined by a similar or different angle, relative to line 62, as the fuel passages. In certain embodiments, the angle of the air passages 48 may range between about 0 to 75 degrees, 0 to 60 degrees, 0 to 45 degrees, 0 to 30 degrees, 0 to 15 degrees, or any suitable angle to provide a desired intensity of swirl. In addition, the angle 61 of fuel passages 58 and the angle of air passages 48 may be configured to cause swirling flows in either direction (64 or 66).

As appreciated, the mixing of air and fuel streams may depend upon factors such as fuel heating value, fuel temperature, air temperature, flow rates, and other turbine conditions. Passages 48, 56, and 58 may be configured to direct fuel streams and air streams to mix in a downstream direction 43, thereby enabling combustion in a desirable location within combustor 16. In some embodiments, the passages may be configured to cause the fuel and air streams to swirl in the same direction, depending on fuel type and other turbine conditions. Alternatively, the passages may be oriented to create a direct, non-swirling, air and/or fuel stream. For example, in an embodiment, fuel passages 58 may be directed outward from the center (i.e., axis 45) of nozzle 12, thereby directing the fuel streams to mix with air streams from air passages 48.

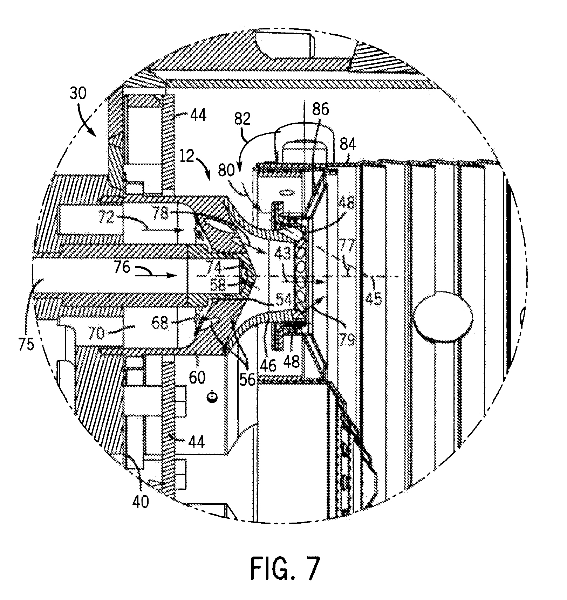

FIG. 7 is a sectional side view of an embodiment of fuel nozzle 12, as shown in FIGS. 5 and 6, along with surrounding components from turbine system 10. As depicted, fuel nozzle 12 includes several passages for air and fuel to pass through portions of fuel nozzle 12. In an embodiment, fuel inlet 68 may be located inside a fuel chamber 70 within nozzle base portion 60. For example, a LBTU fuel may flow in direction 72 towards fuel inlets 68, thereby producing fuel streams through fuel passages 56 that may be mixed with air as they travel in the downstream direction 43 toward a combustion region within combustor 16. Center chamber 75 within nozzle tip portion 59 includes inlets 74 that may allow a natural gas or HBTU fuel to flow in downstream direction 76 through fuel passages 58 and out of fuel nozzle 12. As previously discussed, a rich or HBTU fuel, such as natural gas, may pass through central chamber 75 during turbine startup to provide increased power at startup. Central chamber 75 may route a fuel through fuel passages 58 to the interior of collar 46 for mixing with airstreams in a downstream direction 43 within combustor 16. As appreciated, after fully mixing the air and fuel streams as the mixed stream passes through the transition area of combustor 16, the mixture may combust within a desirable region within combustor 16, thereby producing the energy release required to drive the turbine 18.

In certain embodiments, the fuel chambers 70 and 75 and associated fuel passages 56 and 58 may flow a variety of fuels, such as gas fuel, liquid fuel, HBTU fuel, LBTU fuel, or some combination thereof. The fuels may be the same or different in the chambers 70 and 75 and associated passages 56 and 58. In some embodiments, the fuel chambers 70 and 75 and associated fuel passages 56 and 58 may selectively engage or disengage fuel flow, change the fuel type, or both, in response to various operating conditions. In an embodiment, a syngas or LBTU fuel may flow through fuel chambers 70, while a natural gas flows through central chamber 75, thereby producing a co-flow of the fuels to be mixed with air from air passages 48. Alternatively, the same fuel, such as syngas, may flow through both chambers 75 and 70 during some conditions for turbine system 10.

Air passages 48 may be oriented at an angle 77 with respect to axis 45, where the angle 77 is designed to produce an optimal mixing current with the fuel stream traveling in direction 43. The angle 77 is configured to direct the air streams downstream from the fuel nozzle 12, thereby inducing fuel-air mixing away from the fuel nozzle 12 and the end cover surface 40 (FIG. 4). For example, the angle 77 may range between about 0 to 75 degrees, 0 to 60 degrees, 0 to 45 degrees, 0 to 30 degrees, or 0 to 15 degrees. In certain embodiments, the angle 77 may range between about 15 to 45 degrees.

As previously discussed, fuel may pass through fuel passages 56 downstream, in direction 78, to enable mixture with air streams that are directed towards axis 45, shown by arrow 79. As illustrated, the fuel stream in direction 78 is angled in the downstream direction 43 inwardly toward the axis 45, whereas the fuel stream from fuel passages 58 may be generally aligned with the axis 45. In certain embodiments, the inner end surface 54 has a conical or dome shape, wherein the fuel passages 58 are at least slightly angled away from the axis 45 (e.g., outwardly from the axis 45 in the downstream direction 43). However, the fuel passages 56 and 58 may angle the fuel streams in any direction generally downstream 43, e.g., inwardly, outward, or both, relative to the axis 45.

Within combustor 16, air may flow as shown by arrows 80 and 82 as it flows along the outer portion of liner 84 towards air passages 48. The air stream flowing in direction 79 then mixes with fuel flowing in direction 43. Hot combustion gas recirculates back toward the nozzle 12 and splash plate 86. Air 82 is used to cool splash plate 86 and nozzle forward face 53 by means of cooling holes 55. The air-fuel mixture passes through the transition portion of combustor 16, in the downstream direction 43, to combust inside liner 84, thereby driving the turbine 18.

As appreciated, passages 48, 56, and 58 may be angled in various directions, both axially and radially, to produce a swirling and/or a cutting effect so as to produce a desired mix between fuel streams and air streams from fuel nozzle 12. Further, the arrangement and design of radial collar 46, air passages 48, liner 84, baffle plate 44, and splash plate 86 may be altered to change the direction of air flows 80 and 82. The air flows 80 and 82 may be routed in any suitable manner to enable a mixture with a LBTU fuel flow downstream from fuel nozzle 12. In addition, fuel passages 56 may be configured in any suitable manner to enable the downstream mixture of air and fuel. To enable usage of and a proper combustion of a low cost LBTU fuel, the downstream injection of air, in direction 79, into a fuel stream, in direction 43, delays a mixture of the air and fuel until downstream of fuel nozzle 12, as an alternative to mixture of the air and fuel within a nozzle. The air and fuel streams may be swirled to enable better mixing of air and fuel, depending on fuel and system conditions.

Technical effects of the invention include an improved flexibility of fuel usage in turbine systems, by enabling a lean mixture of LBTU fuel and air. The improved mixing arrangement provides for the air-fuel mixture to occur downstream of a fuel nozzle. An embodiment enables a reduced incidence of early flameholding, flashback, and/or auto ignition within the combustor and fuel nozzle components. The downstream air-fuel mixture enables combustion in a downstream location within the combustor, thereby providing an optimized and efficient turbine combustion process. This may result in increased performance and reduced emissions.

While only certain features of the disclosure have been illustrated and described herein, many modifications and changes will occur to those skilled in the art. It is, therefore, to be understood that the appended claims are intended to cover all such modifications and changes as fall within the true spirit of the disclosure.

Various aspects and embodiments of the present invention are defined by the following numbered clauses:
1. A turbine system, comprising:
   a fuel nozzle, comprising:
      a base portion having a plurality fuel passages leading to fuel ports; and
      an annular wall coupled to the base portion, wherein the annular wall defines a hollow central region downstream from the fuel ports, the annular wall comprises a plurality of air passages leading to air ports on an inner surface surrounding the hollow central region, the air ports are downstream from the fuel ports, and the air ports are angled inward relative to a central longitudinal axis of the fuel nozzle.
2. The turbine system of clause 1, wherein the fuel ports are angled to induce swirl about the central longitudinal axis of the fuel nozzle.
3. The turbine system of any preceding clause, wherein the air ports are angled to induce swirl about the central longitudinal axis of the fuel nozzle.
4. The turbine system of any preceding clause, wherein the air ports are angled to induce swirl in a first direction about the central longitudinal axis of the fuel nozzle, the fuel ports are angled to induce swirl in a second direction about the central longitudinal axis of the fuel nozzle, and the first and second directions are generally opposite from one another.
5. The turbine system of any preceding clause, wherein the fuel passages comprise a first set of fuel passages in a central arrangement and a second set of fuel passages in an annular arrangement surrounding the central arrangement, wherein the first and second sets are configured to couple with different fuel sources.
6. The turbine system of any preceding clause, wherein the first set of fuel passages is angled to induce swirl in a first direction about the central longitudinal axis of the fuel nozzle, the second set of fuel passages is angled to induce swirl in a second direction about the central longitudinal axis of the fuel nozzle, and the first and second directions are generally opposite from one another.
7. The turbine system of any preceding clause, wherein the fuel ports are disposed on a first tapered surface at an upstream end portion of the annular wall, and the air ports are disposed on a second tapered surface at a downstream end portion of the annular wall.
8. A turbine system, comprising:
   a fuel nozzle, comprising:
      a plurality of fuel passages; and
      a plurality of air passages offset in a downstream direction from the fuel passages;
   wherein an air flow from the plurality of air passages is configured to intersect with a fuel flow from the plurality of fuel passages at an angle to induce swirl and mixing of the air flow and the fuel flow downstream of the fuel nozzle.
9. The turbine system of any preceding clause, wherein the plurality of air passages are positioned at a downstream end portion of the fuel nozzle.
10. The turbine system of any preceding clause, wherein the plurality of fuel passages are disposed only in an upstream portion of the fuel nozzle, and the plurality of air passages are disposed only in a downstream portion of the fuel nozzle.
11. The turbine system of any preceding clause, wherein the downstream portion comprises an annular wall, and the plurality of air passages pass through the annular wall between an inner surface and an outer surface.
12. The turbine system of any preceding clause, wherein the plurality of air passages are oriented downstream at a first angle relative to the central longitudinal axis of the fuel nozzle, and the first angle is between approximately 15 degrees and approximately 60 degrees.
13. The turbine system of any preceding clause, wherein the plurality of air passages are oriented at a second angle relative to a plane along the central longitudinal axis, and the second angle is between approximately 0 degrees and approximately 60 degrees.
14. The turbine system of any preceding clause, wherein the plurality of fuel passages are oriented at a third angle relative to the plane along the central longitudinal axis, and the third angle is between approximately 0 degrees and approximately 60 degrees
15. The turbine system of any preceding clause, wherein the plurality of air passages are configured to cause the air flow to swirl in a first direction and the plurality of fuel passages are configured to cause the fuel flow to swirl in a second direction, wherein the first direction is opposite from the second direction.
16. The turbine system of any preceding clause, wherein the plurality of air passages are configured to cause the air flow to swirl in a first direction and the plurality of fuel passages are configured to cause the fuel flow to swirl in a second direction, wherein the first direction is the same as the second direction.
17. A turbine system, comprising:
   a base portion of a fuel nozzle having a plurality fuel passages leading to fuel ports; and
   an annular wall coupled to a downstream portion of the base portion comprising air ports configured to induce swirl in a first direction about a central longitudinal axis of the fuel nozzle, the fuel ports are angled to induce swirl in a second direction about the central longitudinal axis of the fuel nozzle, and the first and second directions are generally opposite from one another.
18. The system of any preceding clause, wherein the annular wall defines a hollow central region from the fuel ports, the annular wall comprises a plurality of air passages leading to air ports on an inner surface surrounding the hollow central region, the air ports are downstream from the fuel ports, and the air ports are angled inward relative to a central longitudinal axis of the fuel nozzle.
19. The system of any preceding clause, wherein injecting the air flow comprises introducing the air flow only at the downstream end portion of the fuel nozzle.
20. The turbine system of any preceding clause, wherein the fuel passages are disposed only in an upstream portion of the fuel nozzle, and the plurality of air passages are disposed only in a downstream portion of the fuel nozzle.

## Claims

1. A turbine system (10), comprising:
a fuel nozzle (12), comprising:
a base portion (60) having a plurality fuel passages (56, 58) leading to fuel ports (56, 58); and
an annular wall (46) coupled to the base portion (60), wherein the annular wall (46) defines a hollow central region downstream from the fuel ports (56, 58), the annular wall (46) comprises a plurality of air passages (48) leading to air ports (52) on an inner surface (51) surrounding the hollow central region, the air ports (52) are downstream from the fuel ports (56, 58), and the air ports (52) are angled inward relative to a central longitudinal axis (45) of the fuel nozzle (12).

2. The turbine system (10) of claim 1, wherein the fuel ports (56, 58) are angled to induce swirl (64) about the central longitudinal axis (45) of the fuel nozzle (12).

3. The turbine system (10) of any preceding claim, wherein the air ports (52) are angled to induce swirl (66) about the central longitudinal axis (45) of the fuel nozzle (12).

4. The turbine system (10) of any preceding claim, wherein the air ports (52) are angled to induce swirl in a first direction (66) about the central longitudinal axis (45) of the fuel nozzle (12), the fuel ports (56, 58) are angled to induce swirl in a second direction (64) about the central longitudinal axis (45) of the fuel nozzle (12), and the first and second directions (64, 66) are generally opposite from one another.

5. The turbine system (10) of any preceding claim, wherein the fuel passages (56, 58) comprise a first set of fuel passages (58) in a central arrangement and a second set of fuel passages (56) in an annular arrangement surrounding the central arrangement, wherein the first and second sets (56, 58) are configured to couple with different fuel sources.

6. The turbine system (10) of claim 5, wherein the first set of fuel passages (58) is angled to induce swirl in a first direction about the central longitudinal axis (45) of the fuel nozzle (12), the second set of fuel passages (56) is angled to induce swirl in a second direction about the central longitudinal axis (45) of the fuel nozzle (12), and the first and second directions are generally opposite from one another.

7. The turbine system (10) of any preceding claim, wherein the fuel ports (56, 58) are disposed on a first tapered surface (54) at an upstream end portion of the annular wall (46), and the air ports (52) are disposed on a second tapered surface (51) at a downstream end portion of the annular wall (46).

8. A turbine system (10), comprising:
a base portion (60) of a fuel nozzle (12) having a plurality fuel passages (56, 58) leading to fuel ports (56, 58); and
an annular wall (46) coupled to a downstream portion of the base portion (60) comprising air ports (52) configured to induce swirl in a first direction (66) about a central longitudinal axis (45) of the fuel nozzle (12), the fuel ports (56, 58) are angled to induce swirl in a second direction (64) about the central longitudinal axis (45) of the fuel nozzle (12), and the first and second directions (64, 66) are generally opposite from one another.

9. The system of any preceding claim, wherein the annular wall (46) defines a hollow central region from the fuel ports (56, 58), the annular wall (46) comprises a plurality of air passages (48) leading to air ports (52) on an inner surface (51) surrounding the hollow central region, the air ports (52) are downstream from the fuel ports (56, 58), and the air ports (52) are angled inward relative to a central longitudinal axis (45) of the fuel nozzle (12).

10. The system of any preceding claim, wherein the fuel passages (56, 58) are disposed only in an upstream portion of the fuel nozzle (12), and the plurality of air passages (48) are disposed only in a downstream portion of the fuel nozzle (12).
